# EUROPEAN PATENT APPLICATION

(11) **EP 4 831 261 A1**
(43) Date of publication of application: **28.10.2026**
(21) Application number: 24906424.7
(22) Date of filing: 18.12.2024
(51) Int. Cl.: C09K 8/68, C09K 8/88, C09K 8/94, C08G 59/40

(54) **CURABLE RESIN COMPOSITION AND USE THEREOF, AND HONEYCOMB RESIN PRODUCT AND PREPARATION METHOD THEREFOR AND USE THEREOF**

(30) Priority: 21.12.2023 CN 202311773025
(71) Applicant: China Petroleum & Chemical Corporation, Beijing 100728 (CN); Sinopec Shengli Oilfield Company, Dongying, Shandong 257001 (CN)
(72) Inventor: LV, Yongli, Dongying, Shandong 257000 (CN); ZHANG, Liaoyuan, Dongying, Shandong 257000 (CN); CHEN, Peisheng, Dongying, Shandong 257000 (CN); SU, Quansheng, Dongying, Shandong 257000 (CN); YU, Denglang, Dongying, Shandong 257000 (CN); LU, Nana, Dongying, Shandong 257000 (CN); ZHONG, Yanlei, Dongying, Shandong 257000 (CN); JIANG, Ana, Dongying, Shandong 257000 (CN); CHEN, Lei, Dongying, Shandong 257000 (CN); WANG, Yuandong, Dongying, Shandong 257000 (CN)
(74) Representative: Hoffmann Eitle
(86) International application number: PCT/CN2024/140394
(87) International publication number: WO 2025/130945

(57) **Abstract**

The present invention relates to the fields of high polymer materials and oil and gas exploitation, and disclosed are a curable resin composition and a use thereof, and a honeycomb resin product and a preparation method therefor and a use thereof.

## Description

### CROSS-REFERENCE TO RELATED APPLICATIONS

The application claims the benefit of the China patent application No. "202311773025.0", filed on December 21, 2023, the content of which is specifically and entirely incorporated herein by reference.

### TECHNICAL FIELD

The present disclosure relates to the fields of high polymer materials and oil and gas exploitation, in particular to a curable resin composition and a use thereof, and a honeycomb resin product and a preparation method therefor and a use thereof.

### BACKGROUND ART

The fracturing fluid systems for shale oil and gas reservoirs are mainly the water-based fracturing fluids. Hydraulic fracturing techniques mainly involve with injecting a proppant-laden sand-carrying fluid into a formation reservoir after the reservoir is fractured by pumping the fracturing fluid having a high displacement into the formation reservoir , thereby supporting the fractures to establish the oil and gas transmission channels. In order to solve a series of problems in the conventional hydraulic fracturing techniques such as sand blockage, debris damage, equipment wear, the distal end of fractures cannot be effectively propped, the scholars have conducted extensive researches on proppants, the researchers are primarily focused on the development of low-density proppants to meet the requirements of enhancing flow conductivity of distal end of fractures, the basic requirement for the proppants is that the proppants can maintain their original structural morphologies under the high pressure.

In the existing proppant-fracturing fluid systems, a high viscosity fracturing fluid is typically required to suspend the particles in order to prevent the proppant particles from settling, the fracturing fluids usually increase the viscosity of fluid by adding water-soluble polymer as the viscosifier. However, the specialized fluid preparation operations and equipments are required for the fracturing process, the consumed power of pumps for delivering the high viscosity fracturing fluid to a specified location underground and flowing back from the formation reservoir is high, and the polymer compounds used in the fracturing fluid enter the formation reservoir in company with the fracturing fluid, a portion of the polymer compounds retained underground will plug the pores of the formation, resulting in the reduced oil production and bringing about pollution to the formation.

### SUMMARY OF THE INVENTION

The present disclosure aims to overcome the defects in the prior art that the proppants cannot satisfy the requirements of high compressive strength and high conductivity and are prone to deformation under the high-temperature and high-pressure conditions, and provides a curable resin composition and a use thereof, and a honeycomb resin product and a preparation method therefor and a use thereof. The component A of the curable resin composition comprises an aqueous thermosetting resin and a solvent-type thermosetting resin, the component A is injected into the formation together with a component B, the curable resin composition are capable of rapidly curing to form a honeycomb proppant which has both the high compressive strength and the low deformation rate under the high-temperature and high-pressure formation conditions .

In order to achieve the above purpose, the first aspect of the present disclosure provides a curable resin composition comprises an aqueous thermosetting resin, a solvent-type thermosetting resin, an emulsifier and water;

wherein the curing agent is selected from modified nanosilica represented by formula I and/or bisphenol phenolic resin; 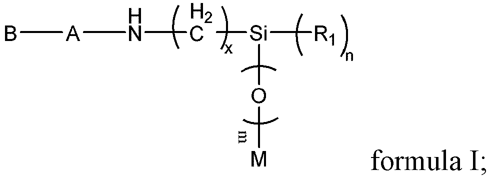
in the formula I, M denotes nanosilica particles, x is an integer from 1 to 4, and R₁ is C1-C4 alkyl;
n is an integer from 0 to 3, m is an integer from 1 to 3, and n+m=3;
A is a structural unit from an anhydride-based compound, and B is a structural unit from a polyamino compound;
the bisphenol phenolic resin comprises a structural unit represented by formula II and a structural unit represented by formula III; 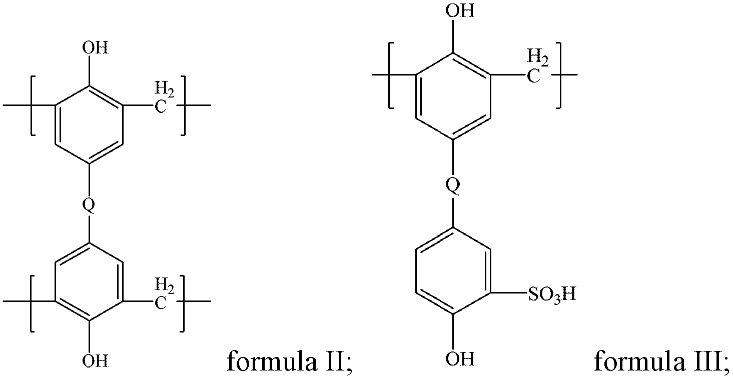
Q is 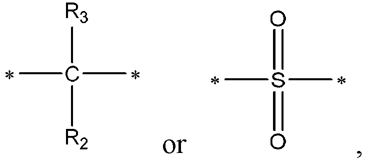 wherein R₂ and R₃ are each independently H, CH₃, CF₃ or CH₂CH₃;
based on a total weight of the bisphenol phenolic resin, a content of said structural unit represented by formula II is 0-100 wt%, and a content of said structural unit represented by formula III is 0-100 wt%.

The second aspect of the present disclosure provides a honeycomb resin product prepared with the curable resin composition according to the first aspect of the present disclosure.

The third aspect of the present disclosure provides a method for preparing the honeycomb resin product comprising:
mixing the ingredients in the curable resin composition according to the first aspect of the present disclosure, curing to obtain the honeycomb resin product.

The fourth aspect the present disclosure provides a method for using the curable resin composition according to the first aspect of the present disclosure or the honeycomb resin product according to the second aspect of the present disclosure in at least one of oil reservoir development, architectural floor tiles and adsorbent materials.

Due to the aforementioned technical scheme, a curable resin composition and a use thereof, and a honeycomb resin product and a method therefor and a use thereof provided by the present disclosure produce the following favorable effects: the component A of the curable resin composition comprises an aqueous thermosetting resin having a desirable fluidity, when the component A and the component B are injected into high-temperature and high-pressure formation environment respectively or simultaneously, the aqueous thermosetting resin in the composition is capable of rapidly curing with a specific curing agent to form a honeycomb product. The curing agent has a specific structure, the product formed after reacting with the aqueous thermosetting resin can serve as a proppant, possessing high compressive strength and low deformation rate.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present disclosure provides a curable resin composition comprises a component A and a component B, wherein the component A and the component B are each independently present;
the component A comprises an aqueous thermosetting resin, a solvent-type thermosetting resin, an emulsifier and water;
the component B comprises a curing agent selected from modified nanosilica represented by formula I and/or a bisphenol phenolic resin; 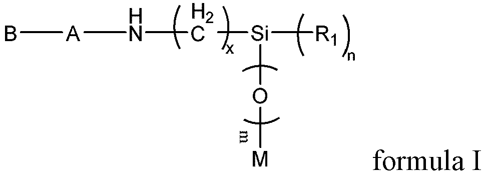
in the formula I, M denotes nanosilica particles, x is an integer from 1 to 4, and R₁ is C1-C4 alkyl;
n is an integer from 0 to 3, m is an integer from 1 to 3, and n+m=3;
A is a structural unit from an anhydride-based compound, and B is a structural unit from a polyamino compound;
the bisphenol phenolic resin comprises a structural unit represented by formula II and a structural unit represented by formula III; 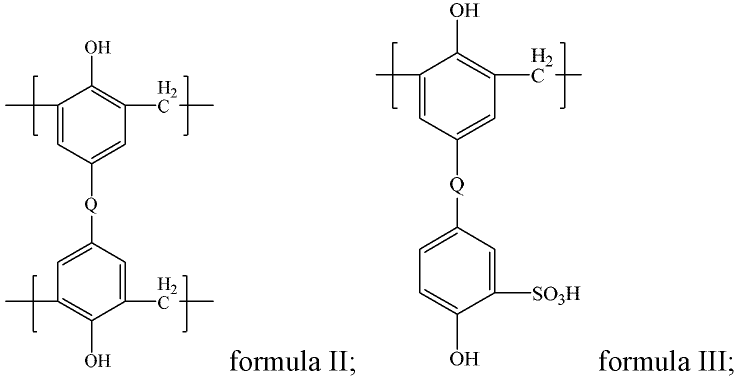
Q is 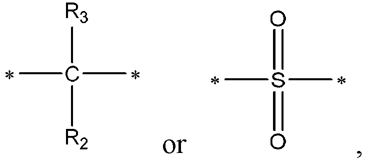 wherein R₂ and R₃ are each independently H, CH₃, CF₃ or CH₂CH₃;
based on a total weight of the bisphenol phenolic resin, a content of said structural unit represented by formula II is 0-100 wt%, and a content of said structural unit represented by formula III is 0-100 wt%.

In the present disclosure, the content of said structural unit represented by formula II and the content of said structural unit represented by formula III are each independently 0wt%, 1wt%, 2wt%, 5wt%, 10wt%, 15wt%, 20wt%, 30wt%, 35wt%, 40wt%, 42wt%, 45wt%, 50wt%, 53wt%, 55wt%, 60wt%, 65wt%, 68wt%, 70wt%, 75wt%, 80wt%, 85wt%, 90wt%, 95wt%, 96wt%, 97wt%, 98wt%, 99wt%, 100wt%, and a random value within the range consisting of any two numerical values mentioned above.

In the present disclosure, the content of said structural unit represented by formula II and the content of said structural unit represented by formula III are not equal to zero simultaneously, and a sum of the content of said structural unit represented by formula II and the content of said structural unit represented by formula III are 100%.

In the present disclosure, the aqueous thermosetting resin can be completely soluble in water.

In the present disclosure, the contents of said structural unit represented by formula II and said structural unit represented by formula III are measured by Gel Permeation Chromatography (GPC).

In the present disclosure, the curing agent is selected from the group consisting of a modified nanosilica and/or a bisphenol phenolic resin with the above structures, such that the aqueous thermosetting resin and the solvent-type thermosetting resin are sufficiently cured when the curable resin composition is injected into high-temperature and high-pressure formation, thereby forming an honeycomb resin product having a specific structure, a high compressive strength and a low deformation rate.

In a specific embodiment of the present disclosure, the modified nanosilica represented by formula I is used as the curing agent, the modified nanosilica has a smaller particle size and a larger specific surface area, which is desirably dispersible in the epoxy resin, and has a high content of amino group, the amino group exhibits a dendritic morphology at the M surface of the nanosilica particles, when the modified nanosilica is added into the epoxy resin, it is capable of performing the bonding reaction with epoxy groups of the epoxy resin, thereby sufficiently exploiting advantages of the two compounds, allowing the cured epoxy resin to exhibit a higher compressive strength.

In another embodiment of the present disclosure, when the bisphenol phenolic resin is used as the curing agent, since the bisphenol phenolic resin comprises a specific structural unit I and structural unit II, a molecular chains of the bisphenol phenolic resin can generate a micro-crosslinked structure to form a phenolic resin with a micro network and finally cause that the bisphenol phenolic resin has a desirable aqueous solubility and ensure that the cured resin products have a specific property of a high compressive strength. When the bisphenol phenolic resin is used as a curing agent for curing the epoxy resin, it can significantly improve the high temperature resistance and compressive strength of the epoxy resin. In particular, when the contents of a structural unit represented by formula II and a structural unit represented by formula III in the bisphenol phenolic resin satisfy the specific contents mentioned above, due to an existence of sulfonic acid groups, the bisphenol phenolic resin has excellent water solubility and storage stability, thereby further improving the compressive strength of the epoxy resin cured therefrom under high-temperature and high-pressure conditions.

According to the present disclosure, in formula I, the anhydride-based compound is at least one selected from the group consisting of maleic anhydride, phthalic anhydride, and succinic anhydride.

According to the present disclosure, the polyamino compound includes a linear polyethylene polyamino compound having a structure represented by formula IV, or a nonlinear polyethylene imine having a number average molecular weight within a range of 300-3,000; 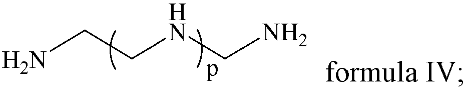 wherein p is an integer of 1-6.

In the present disclosure, the polyamino compound is selected from the above compounds, thus the modified nanosilica has a high contents of amino groups, which further improve curing effect of the aqueous thermosetting resin and the solvent-type thermosetting resin.

According to the present disclosure, the nanosilica particles M have an average particle size within a range of 10-500nm and a specific surface area within a range of 10-300 m²/g.

In the present disclosure, the average particle size of the nanosilica particles M may be 10nm, 11nm, 15nm, 20nm, 25nm, 30nm, 40nm, 50nm, 60nm, 70nm, 80nm, 90nm, 100nm, 120nm, 150nm, 200nm, 280nm, 300nm, 310nm, 330nm, 350nm, 400nm, 420nm, 430nm, 440nm, 450nm, 460nm, 470nm, 480nm, 490nm, 500nm, and a random value within the range consisting of any two numerical values mentioned above.

In the present disclosure, the specific surface area of nanosilica particles M may be 10m²/g, 20m²/g, 30m²/g, 40m²/g, 50m²/g, 60m²/g, 70m²/g, 80m²/g, 90m²/g, 100m²/g, 110m²/g, 120m²/g, 130m²/g, 140m²/g, 150m²/g, 160m²/g, 180m²/g, 200m²/g, 210m²/g, 220m²/g, 250m²/g, 260m²/g, 270m²/g, 280m²/g, 285m²/g, 290m²/g, 300m²/g, and a random value within the range consisting of any two numerical values mentioned above.

Further optionally, the modified nanosilica has an average particle size within a range of 10-500nm and a specific surface area within a range of 50-500 m²/g.

According to the present disclosure, the modified nanosilica has a particle size dispersion coefficient within a range of 0.09-0.15.

In the present disclosure, the particle size dispersion coefficient of said modified nanosilica may be 0.09, 0.1, 0.11, 0.12, 0.13, 0.14, 0.15, and a random value within the range consisting of any two numerical values mentioned above.

In the present disclosure, when the particle size dispersion coefficient of the modified nanosilica satisfies the above range, it can improve dispersibility of the modified nanosilica in the aqueous thermosetting resin and the solvent-type thermosetting resin, and further enhance curing property of a curable resin composition when using the modified nanosilica as a curing agent.

According to the present disclosure, the modified nanosilica has an amino content within the range of 0.1-5mmol/g.

In the present disclosure, the amino content of the modified nanosilica may be 0.1mmol/g, 0.2mmol/g, 0.3mmol/g, 0.4mmol/g, 0.5mmol/g, 0.6mmol/g, 0.7mmol/g, 0.8mmol/g, 0.9mmol/g, 1mmol/g, 1.1mmol/g, 1.2mmol/g, 1.3mmol/g, 1.4mmol/g, 1.5mmol/g, and a random value within the range consisting of any two numerical values mentioned above.

According to the present disclosure, in the bisphenol phenolic resin, Q is 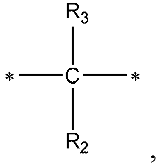 wherein R₂ and R₃ are each independently H or CH₃.

Further optionally, R₂ and R₃ are each independently CH₃.

According to the present disclosure, based on the total weight of the bisphenol phenolic resin, a content of said structural unit represented by formula II is 60-80 wt%, and a content of said structural unit represented by formula III is 20-40 wt%.

In the present disclosure, the content of said structural unit represented by formula II may be 60wt%, 65wt%, 68wt%, 70wt%, 75wt%, 80wt%, and a random value within the range consisting of any two numerical values mentioned above; the content of said structural unit represented by formula III may be 20wt%, 23wt%, 25wt%, 26wt%, 27wt%, 28wt%, 30wt%, 32wt%, 35wt%, 36wt%, 37wt%, 38wt%, 40wt%, and a random value within the range consisting of any two numerical values mentioned above.

According to the present disclosure, the bisphenol phenolic resin has a weight average molecular weight within a range of 2,000-10,000g/mol.

In the present disclosure, the weight average molecular weight of the bisphenol phenolic resin may be 2,000g/mol, 2,100g/mol, 2,200g/mol, 2,300g/mol, 2,500g/mol, 3,000g/mol, 3,300g/mol, 3,500g/mol, 4,000g/mol, 4,500g/mol, 4,800g/mol, 5,000g/mol, 5,300g/mol, 5,400g/mol, 5,500g/mol, 5,600g/mol, 6,000g/mol, 6,100g/mol, 6,200g/mol, 6,500g/mol, 6,800g/mol, 7,000g/mol, 8,000g/mol, 8,500g/mol, 9,000g/mol, 9,500g/mol, 10,000g/mol, and a random value within the range consisting of any two numerical values mentioned above.

Further optionally, the bisphenol phenolic resin has a weight average molecular weight within the range of 3,000-5,000g/mol.

According to the present disclosure, in the curable resin composition, the aqueous thermosetting resin is contained in an amount of 5-40 parts by weight, the solvent-type thermosetting resin is contained in an amount of 10-76 parts by weight, the emulsifier is contained in an amount of 0.5-4 parts by weight, and water is contained in an amount of 16-50 parts by weight.

In the present disclosure, in the curable resin composition, the aqueous thermosetting resin may be contained in an amount of 5 parts by weight, 6 parts by weight, 7 parts by weight, 8 parts by weight, 9 parts by weight, 10 parts by weight, 12 parts by weight, 14 parts by weight, 15 parts by weight, 18 parts by weight, 20 parts by weight, 25 parts by weight, 28 parts by weight, 30 parts by weight, 35 parts by weight, 38 parts by weight, 40 parts by weight, and a random value within the range consisting of any two numerical values mentioned above.

In the present disclosure, the solvent-type thermosetting resin may be contained in an amount of 10 parts by weight, 12 parts by weight, 14 parts by weight, 15 parts by weight, 18 parts by weight, 20 parts by weight, 25 parts by weight, 28 parts by weight, 30 parts by weight, 35 parts by weight, 38 parts by weight, 40 parts by weight, 45 parts by weight, 48 parts by weight, 49 parts by weight, 50 parts by weight, 55 parts by weight, 58 parts by weight, 59 parts by weight, 60 parts by weight, 62 parts by weight, 64 parts by weight, 66 parts by weight, 68 parts by weight, 69 parts by weight, 70 parts by weight, 71 parts by weight, 72 parts by weight, 73 parts by weight, 74 parts by weight, 75 parts by weight, 76 parts by weight, and a random value within the range consisting of any two numerical values mentioned above.

In the present disclosure, the emulsifier may be contained in an amount of 0.5 part by weight, 0.6 part by weight, 0.7 part by weight, 0.8 part by weight, 0.9 part by weight, 1 part by weight, 1.5 parts by weight, 2 parts by weight, 2.4 parts by weight, 2.5 parts by weight, 2.7 parts by weight, 3 parts by weight, 3.1 parts by weight, 3.5 parts by weight, 3.8 parts by weight, 4 parts by weight, and a random value within the range consisting of any two numerical values mentioned above.

In the present disclosure, the water may be contained in an amount of 16 parts by weight, 17 parts by weight, 18 parts by weight, 19 parts by weight, 20 parts by weight, 22 parts by weight, 25 parts by weight, 27 parts by weight, 28 parts by weight, 29 parts by weight, 30 parts by weight, 35 parts by weight, 38 parts by weight, 40 parts by weight, 42 parts by weight, 43 parts by weight, 45 parts by weight, 47 parts by weight, 48 parts by weight, 49 parts by weight, 50 parts by weight, and a random value within the range consisting of any two numerical values mentioned above.

In the present disclosure, when each ingredient of the curable resin compositions satisfies the above-mentioned ranges, it enables the composition to be rapidly cured in a high-temperature and high-pressure formation environment to form a honeycomb product.

Further optionally, in the curable resin composition, the aqueous thermosetting resin is contained in an amount of 30-40 parts by weight, the solvent-type thermosetting resin is contained in an amount of 20-40 parts by weight, the emulsifier is contained in an amount of 2-3 parts by weight, and water is contained in an amount of 17-48 parts by weight

According to the present disclosure, relative to total dosage of the component A, the component B is used in an amount of 40-80 parts by weight, optionally 60-80 parts by weight.

In the present disclosure, relative to total dosage of the component A, the component B is used in an amount of 40 parts by weight, 45 parts by weight, 48 parts by weight, 49 parts by weight, 50 parts by weight, 55 parts by weight, 58 parts by weight, 59 parts by weight, 60 parts by weight, 62 parts by weight, 64 parts by weight, 66 parts by weight, 68 parts by weight, 69 parts by weight, 70 parts by weight, 71 parts by weight, 72 parts by weight, 73 parts by weight, 74 parts by weight, 75 parts by weight, 76 parts by weight, 78 parts by weight, 79 parts by weight, 80 parts by weight, and a random value within the range consisting of any two numerical values mentioned above, optionally 60-80 parts by weight.

According to the present disclosure, the aqueous thermosetting resin has a structure represented by formula V; 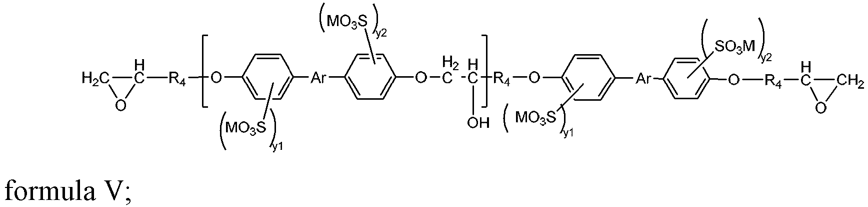
R₄ is C1-C3 alkylene;
Ar is 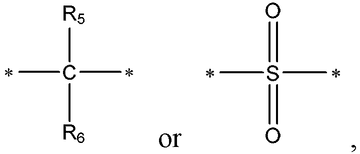 wherein R₅, R₆ are each independently H, CH₃, CF₃, or CH₂CH₃;
$0 < y 1 + y 2 \leq 8 ;$
m is K or Na.

In the present disclosure, the aqueous thermosetting resin contains the hydrophilic sulfonate groups, which can significantly improve hydrophilicity of the aqueous thermosetting resin, when the aqueous thermosetting resin is mixed with a solvent-type thermosetting resin, and a specific curing agent is added, a phase change reaction can be performed under the formation conditions to form a honeycomb solid phase proppant.

According to the present disclosure, R₄ is C₁-C₂ alkylene.

According to the present disclosure, Ar is 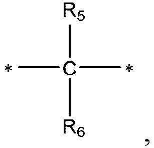 wherein R₅ and R₆ are each independently H, CH₃, CF₃ or CH₂CH₃.

According to the present disclosure, M is Na.

According to the present disclosure, a content of S element in the aqueous thermosetting resin is within a range of 6-20wt%.

In the present disclosure, the content of S element in the aqueous thermosetting resin may be 6wt%, 7wt%, 8wt%, 9wt%, 10wt%, 11wt%, 12wt%, 13wt%, 14wt%, 15wt%, 16wt%, 17wt%, 18wt%, 19wt%, 20wt%, and a random value within the range consisting of any two numerical values mentioned above.

In the present disclosure, when the content of S element in the aqueous thermosetting resin satisfies the above-mentioned range, so that a content of sulfonic acid group in the aqueous thermosetting resin meets the requirements, it has excellent water solubility and exhibits a stable dispersion in an aqueous solution.

Further optionally, the content of S element in the aqueous thermosetting resin is within the range of 10-15wt%.

According to the present disclosure, the aqueous thermosetting resin has an epoxide equivalent within a range of 100-300mol/100g.

In the present disclosure, the epoxide equivalent of the aqueous thermosetting resin may be 100mol/100g, 120mol/100g, 150mol/100g, 160mol/100g, 170mol/100g, 180mol/100g, 200mol/100g, 250mol/100g, 280mol/100g, 300mol/100g, and a random value within the range consisting of any two numerical values mentioned above.

In the present disclosure, when the epoxide equivalent weight of the aqueous thermosetting resin satisfies the above range, it can increase reactivity of said aqueous thermosetting resin, and enable a more thorough reaction of the aqueous thermosetting resin when it is subjected to a curing reaction, further enhancing the compressive strength when using the product prepared with the resin as a proppant, and at the same time, it is not easily deformed and improves permeability.

Further optionally, the aqueous thermosetting resin has an epoxide equivalent within a range of 150-200mol/100g.

According to the present disclosure, the emulsifier is selected from a cationic emulsifier and/or an anionic emulsifier.

Further optionally, the cationic emulsifier is at least one selected from the group consisting of dodecyl trimethyl ammonium chloride, tetradecyl trimethyl ammonium chloride, hexadecyl trimethyl ammonium chloride, octadecyl trimethyl ammonium chloride, docosyl trimethyl ammonium chloride, N,N-ethylene bis-octadecyl dimethyl ammonium chloride, dodecyl dimethyl benzyl ammonium chloride, hexadecyl dimethyl benzyl ammonium chloride, octadecyl dimethyl benzyl ammonium chloride.

Further optionally, the anionic emulsifier is at least one selected from the group consisting of sodium stearate, sodium dodecyl sulfate, sodium dodecyl benzene sulfonate, sodium oleate, sodium laurate, sodium rosinate, sodium bis(dodecyl phenyl ether) disulfonate, sodium dibutyl naphthyl sulfonate.

According to the present disclosure, the solvent-type thermosetting resin is at least one selected from the group consisting of an epoxy resin (EP), a polyimide (PI), and an unsaturated resin.

According to the present disclosure, the curable resin composition has an apparent viscosity at 25°C within a range of 100-400mPa·s, optionally within a range of 200-300mPa·s.

In the present disclosure, the apparent viscosity at 25°C of the curable resin composition may be 100mPa·s, 110mPa·s, 120mPa·s, 150mPa·s, 160mPa·s, 170mPa·s, 180mPa·s, 190mPa·s, 200mPa·s, 220mPa·s, 250mPa·s, 280mPa·s, 300mPa·s, 330mPa·s, 350mPa·s, 380mPa·s, 400mPa·s, and a random value within the range consisting of any two numerical values mentioned above, optionally within a range of 200-300mPa·s.

In the present disclosure, the apparent viscosity refers to the apparent viscosity within 30 minutes of mixing the component A and the component B of the resin composition, the reason may be that after 30 minutes, the component A in the resin composition is cured due to the existence of a curing agent, the apparent viscosity in the meanwhile will be meaningless.

The second aspect of the present disclosure provides a honeycomb resin product prepared with the curable resin composition according to the first aspect of the present disclosure.

According to the present disclosure, the honeycomb resin product has connected channels.

In the present disclosure, the honeycomb resin product has connected channels, which enable the fractures to have excellent flow diversion capacity while supporting the fractures and the micro-cracks; when the honeycomb resin product is used in the field of oil reservoirs, it can improve the oil and gas recovery rate.

According to the present disclosure, the honeycomb resin product has a porosity within a range of 1-40%.

In the present disclosure, the porosity of said honeycomb resin product may be 1%, 2%, 3%, 4%, 5%, 10%, 20%, 25%, 26%, 28%, 30%, 31%, 35%, 38%, 40%, and a random value within the range consisting of any two numerical values mentioned above.

According to the present disclosure, the honeycomb resin product has a pore size within a range of 0.1-0.7mm.

In the present disclosure, the pore size of said honeycomb resin product may be 0.1nm, 0.2nm, 0.3nm, 0.4nm, 0.5nm, 0.6nm, 0.7nm, and a random value within the range consisting of any two numerical values mentioned above.

According to the present disclosure, the honeycomb resin product has a pore density within the range of 200-10,000 pcs/cm².

In the present disclosure, the pore density of said honeycomb resin product may be 200, 210, 300, 350, 400, 500, 600, 700, 800, 900, 1,000, 1,200, 1,500, 2,000, 2,200, 3,000, 3,500, 4,000, 4,500, 5,000, 5,500, 5,800, 6,000, 6,600, 7,000, 7,800, 8,000, 9,000, 9,200, 9,500, 9,800, 10,000, and a random value within the range consisting of any two numerical values mentioned above.

According to the present disclosure, the honeycomb resin product has a density within a range of 0.85-0.95g/cm³.

In the present disclosure, the density of said honeycomb resin product may be 0.85g/cm³, 0.86g/cm³, 0.87g/cm³, 0.88g/cm³, 0.89g/cm³, 0.9g/cm³, 0.93g/cm³, 0.94g/cm³, 0.95g/cm³, and a random value within the range consisting of any two numerical values mentioned above.

In the present disclosure, the honeycomb resin product has the specified porosity, pore size, pore density and density such that the solid phase proppant can maintain a high compressive strength, a low deformation level and a high permeability while having a high flow diversion capacity.

In the present disclosure, the permeability of the epoxy resin product under a pressure of 40MPa is used for characterizing the flow conductivity of the epoxy resin product, i.e., the higher the permeability of the epoxy resin product under the pressure of 40MPa, the higher the flow diversion capacity of the epoxy resin product.

In the present disclosure, the pore density refers to the number of pores within a range of a certain dimension (1cm×1cm) of the honeycomb resin product.

Further optionally, the honeycomb resin product has a porosity within a range of 20-30%.

Further optionally, the honeycomb resin product has a pore size within a range of 0.3-0.5nm.

Further optionally, the honeycomb resin product has a pore density within a range of 1,000-1,500/cm².

Further optionally, the honeycomb resin product has a density within a range of 0.88-0.91g/cm³.

According to the present disclosure, the honeycomb resin product has a compressive strength within a range of 20-40MPa; optionally within a range of 30-40MPa.

In the present disclosure, the compressive strength of said honeycomb resin product may be 20MPa, 22MPa, 23MPa, 25MPa, 28MPa, 30MPa, 35MPa, 40MPa, and a random value within the range consisting of any two numerical values mentioned above, optionally within a range of 30-40MPa.

According to the present disclosure, the deformation ratio of the honeycomb resin product under a pressure of 40MPa and a temperature of 90°C is equal to or less than 8%, optionally equal to or less than 4%.

In the present disclosure, the deformation ratio of the honeycomb resin product under a pressure of 40MPa and a temperature of 90°C may be 0.1%, 0.5%, 0.8%, 0.9%, 1%, 2%, 2.5%, 3%, 3.5%, 4%, 5%, 6%, 7%, 8%, and a random value within the range consisting of any two numerical values mentioned above, optionally within a range of 0.1-4%.

The third aspect of the present disclosure provides a method for preparing the honeycomb resin product comprising:
mixing ingredients of component A in the curable resin composition according to the first aspect of the present disclosure, then blending with a component B and curing to obtain the honeycomb resin product.

According to the present disclosure, a curing conditions comprise a curing temperature within a range of 90-150°C and a curing time within a range of 10min to 6h.

Further optionally, the curing conditions comprise a curing temperature within a range of 120-150°C and a curing time within a range of 30min to 4h.

In the present disclosure, mixing conditions for the ingredients in component A, and mixing conditions for component A and component B are not particularly limited as long as the components can be sufficiently and uniformly mixed.

The fourth aspect the present disclosure provides a method for using the curable resin composition according to the first aspect of the present disclosure or the honeycomb resin product according to the second aspect of the present disclosure in at least one of oil reservoir development, architectural floor tiles and adsorbent materials.

The following will provide a detailed description of the present disclosure through examples. In the following examples,
the permeability of the honeycomb resin product was measured according to the China Oil and Nature Gas Industry Standard SY/T5345-2007, the specific test method was as follows: the sample was cured, the dimensions included a diameter Φ of 24mm and a length L of 40 mm. The cured sample was placed in a rock core displacement device, and it was ensured that no leakage existed between the sample column and a rubber sleeve on the inner wall of a gripper of the rock core displacement device. After the assembly was completed, a certain pressure difference was applied, volume and time of the fluid flowing through the honeycomb resin product were recorded, and the permeability was finally calculated.

The calculation formula was as follows: $\frac{\left(2\times {Q}_{2}\times L\times μ\times {p}_{0}\right)}{A \times \left({p}_{1}^{2}-{p}_{2}^{2}\right)} \times {10}^{2}$
wherein K_{g} denoted measured permeability, mD; Q₂ denoted a flow rate of fluid at the outlet of the rock core, cm³/s; L denoted length of rock core, cm; A denoted cross-sectional area of the rock core, cm²; P₀ denoted an atmospheric pressure, MPa; P₁ denoted an absolute pressure at an inlet of the rock core, MPa; P₂ denoted an absolute pressure at an outlet of the rock core, MPa; µ denoted a fluid viscosity, mPa·s.

The porosity of the honeycomb resin product was measured by using a volume of saturated liquid, specifically: the cured sample column was placed in a blow oven at 10°C and dried to a constant weight, radius r (in the unit of mm) and length L (in the unit of mm) of the sample column were measured, volume of the sample column was calculated for later use. Using a measuring cylinder to measure 200mL of deionized water, the sample column was sufficiently soaked in the deionized water, 24 hours later, water in said measuring cylinder was removed and volume V1 (mL) of water was measured, the porosity was calculated according to following formula: porosity = (200-V1)/(3.14×r²×L).

The pore size of the honeycomb resin product was measured and statistically analyzed by the observation with a stereoscopic microscope, specifically:
the honeycomb resin product was observed under a stereoscopic microscope, pore size of the honeycomb resin product was measured within the visual field range of 1cm×1cm, pore sizes of 20 pores were measured, the pore sizes were averaged to obtain the pore size of the honeycomb resin product.

The pore density of the honeycomb product was measured and statistically analyzed by the observation with a stereoscopic microscope, the specific measuring method was as follows:
the honeycomb resin product was observed under a stereoscopic microscope, pore size of the honeycomb resin product was measured within the visual field range of 1cm×1cm, pore diameters of 20 pores were measured, the pore diameters were averaged to obtain the pore diameter D (in the unit of mm) of the honeycomb resin product, wherein the pore density was calculated according to following formula: pore density = (1cm×1cm) × porosity/pore area, wherein the pore area was calculated assuming the pores are circular , i.e., pore area=*π*×(D/2)², mm².

The compressive strength of the honeycomb resin product was measured by a universal weight loading machine.

The deformation rate of the honeycomb resin product was measured according to the following method:
a diameter of the honeycomb resin product was measured and denoted as D0 (in the unit of mm) under normal pressure and temperature of 25°C, after the honeycomb resin product was extruded by a high-temperature and low-temperature universal material testing machine under a pressure of 40MPa and a temperature of 90°C, a diameter of the extruded honeycomb resin product was measured and denoted as D1, deformation rate = (D0-D1)/D0 ×100%.

The density of said honeycomb resin product was measured by a method of measuring mass and volume.

The apparent viscosity of the curable resin composition was measured using a six-speed rotational viscometer, specifically: 300mL of the curable resin composition was placed in a sample chamber, temperature was set at 25°C and rotation speed was set at 100rad/min, and the apparent viscosity value was read after 1 min.

The weight average molecular weights of the aqueous thermosetting resin and the bisphenol phenolic resin were measured by the Gel Permeation Chromatography (GPC), specifically: the weight average molecular weight of the water-soluble thermosetting resin (or bisphenol phenolic resin) was measured by dissolving a certain amount of aqueous thermosetting resin (or bisphenol phenolic resin) in chromatographically pure tetrahydrofuran (THF) to prepare a solution to be measured, a mobile phase was THF, and a reference substance was polystyrene.

The content of S element in the aqueous thermosetting resin was measured by an elemental analysis, in particular, the content was tested according to an oxygen bottle combustion method.

The epoxide equivalent of the aqueous thermosetting resin was measured by a hydrochloric acid-pyridine method, which specifically comprised the following steps: 0.5g of a sample was added into 25mL of a solution containing hydrochloric acid-acetone, and reacted at 45°C for 3.5 hours. 25mL of hydrochloric acid-acetone solution was transferred, 3 droplets of a mixed indicator was added to carry out a blank titration (the titration should be completed within 30s), the terminus was reached after keeping the solution fadeless for 5s, the volume of consumed NaOH standard solution was denoted as V₀, mL; the mixed solution was transferred, 3 droplets of a mixed indicator was added (the addition process should be completed within 30s), after keeping the solution fadeless for 5s, titration was performed by using a sodium hydroxide solution, the consumption amount of NaOH solution having a concentration of 0.5mol/L was recorded, it was denoted as V, mL, the epoxide equivalent was calculated according to the following formula:
$EV = \frac{\left({V}_{0}-V\right) C}{m \times 10}$
wherein EV = epoxide equivalent, mol/100g; V₀ = volume of sodium hydroxide standard solution consumed in the blank experiment, mL; V = volume of sodium hydroxide standard solution consumed by the test sample, mL; C = concentration of NaOH standard solution, mol/L; m = the test mass, g.

The particle size dispersion coefficient of the modified nanosilica M was measured by a Dynamic Light Scattering (DLS).

The average particle size of the modified nanosilica M was measured by the Scanning Electron Microscope (SEM), specifically, a certain number Z of particles was selected in the SEM image, the particle size (nm) of each particle was measured, particle size value of each particle was summed and recorded as S (nm), and the average value thereof (i.e., the average particle size) was calculated according to the following formula: average particle size = S/Z, nm.

The content of amino group in the modified nanosilica M was obtained by an elemental analysis, specifically, a certain mass M of the nano-silica particles was weighed and subjected to elemental analysis, content of N element was obtained and denoted as M1. The same mass m of the modified nanosilica M was weighed, and subjected to the elemental analysis, content of N element was obtained and denoted as M2. Mole number n of the N element in the tested sample was n=(M2-M1) ×M/14, and the content of the amino group in the tested sample was calculated according to the following formula: amino content = (n/m) ×1000, mmol/g.

The specific surface area of the modified nanosilica M was measured by the specific surface area tester (model BSD-660A6S | B6S).

Other raw materials used in examples and comparative examples were all commercially available products.

Curable compositions A1-A10, D1-D2 were prepared according to the formulations in Table 1.

Wherein the aqueous thermosetting resin was prepared with the following method:
S1: 57g of bisphenol A, 0.02g of ferric trichloride and 75g of concentrated sulfuric acid were contacted to perform sulfonation reaction at a reaction temperature of 130°C for a reaction time of 3 hours, a sulfonated bisphenol compound BPAS-1 was obtained, wherein molar ratio of bisphenol A to concentrated sulfuric acid was 1: 3, mass ratio of bisphenol A to ferric trichloride was 1: 0.00035.
S2: 8g of NaOH was dissolved in deionized water, 48g of BPAS-1 was added, at a temperature of 50°C, 18g of epoxy chloropropane was dropwise added to perform polycondensation reaction at a reaction temperature of 50°C for a reaction time of 3h, an aqueous thermosetting resin was obtained, wherein mass ratio of BPAS-1 to NaOH was 1: 0.17.

Wherein in the aqueous thermosetting resin, a content of S element was 13.4wt%, an epoxide equivalent was 182 mol/100g, a weight average molecular weight was 3,891g/mol, R₄ was C1 alkylene, y₁ was 1, y₂ was 1, and M was Na.

Modified nanosilica M1-M2 were prepared according to the following method:

### Preparation of modified nano-silica M1

### S1: preparation of aminopropyl functionalized nanosilica:

2g of nanosilica particles with an average particle size of 30nm and a specific surface area of 200m²/g was weighed, and dispersed in 100mL of anhydrous toluene, then added 0.2g of amino propyl triethoxy silane, a reflux stirring reaction was performed at 150°C under protection of nitrogen gas for 24 hours, after the reaction was finished, centrifuged was performed to obtain a solid product, the solid product was repeatedly washed with acetone and dichloromethane for 3 times, and subjected to the vacuum drying at 40°C for 12 hours, the aminopropyl functionalized nanosilica was obtained.

### S2: preparation of carboxyl functionalized nano-silica:

2g of the prepared aminopropyl functionalized nanosilica was weighed, and dispersed in 50mL of dimethylbenzene, then added 0.2g of maleic anhydride, then a reflux stirring reaction was performed at 160°C under protection of nitrogen gas for 6 hours, after the reaction was finished, washed repeatedly with methanol for 3 times, and subjected to the vacuum drying at 40°C for 12 hours, the carboxyl functionalized nanosilica was obtained.

### S3: preparation of modified nano-silica:

1g of the prepared carboxyl functionalized nanosilica was weighed, and dispersed in 50mL of toluene, then added 0.25g of diisopropyl carbodiimide (DIC) and 0.06g of 1,8-diazabicycloundecen-7-ene (DBU), and stirring at room temperature (25°C) for 1 hour to activate, and then added 4g of polyethyleneimine (with a number average molecular weight of 1,500), and continue a reaction at room temperature for 12 hours, after the reaction was finished, washed repeatedly with methanol for 3 times, and subjected to the vacuum drying at 40°C for 12 hours, the modified nanosilica M1 with a structure represented by formula I was obtained, wherein n is 0, m is 3, and x is 3.

Modified nanosilica M1 had a particle size of 30nm, a specific surface area of 300m²/g, an amino content of 2mmol/g, and a dispersion coefficient PDI of 0.11.

### Preparation of modified nanosilica M2

Modified nanosilica M2 was prepared according to the preparation method of M1, except that the specific surface area of the nanosilica particles was 100m²/g, and the dosage of polyethyleneimine in step S3 was 0.4g; the prepared modified nanosilica M2 had a particle size of 30nm, a specific surface area of 230m²/g, an amino content of 0.1mmol/g, and a dispersion coefficient PDI of 0.13.

Bisphenol phenolic resin F1-F2 were prepared with the following method.

### Preparation of bisphenol phenolic resin F1

S1: 57g of bisphenol A, 0.03g of ferric trichloride and 25g of concentrated sulfuric acid (98wt%) were contacted to carry out a sulfonation reaction at a reaction temperature of 130°C for a reaction time of 4 hours, wherein molar ratio of bisphenol A to concentrated sulfuric acid was 1: 1, mass ratio of bisphenol A to ferric trichloride was 1: 0.0005. After purification, the monosulfonated bisphenol A-monomer B1 was obtained;
S2: a second monomer comprised 60g of a monomer A(bisphenol A) and 21g of a monomer B1 (monosulfonated bisphenol compound A) were mixed with 30g of a first monomer (paraformaldehyde) in deionized water under a stirring condition, then NaOH was added such that the concentration of n(OH)⁻ in the system was 2mol/L, a polymerization was performed at 50°C for 4 hours, a bisphenol phenolic resin F1 was obtained, wherein based on the total weight of the monomers, the first monomer was used in an amount of 27wt%, the second monomer was used in an amount of 73wt%, and the weight average molecular weight was 3,657 g/mol.

### Preparation of bisphenol phenolic resin F2

The bisphenol phenolic resin F2 was prepared according to the preparation method for the bisphenol phenolic resin F1, except that paraformaldehyde was replaced with an equal mass amount of formaldehyde, the bisphenol phenolic resin F2 was obtained, wherein based on the total weight of the monomers, the first monomer was used in an amount of 27wt%, the second monomer was used in an amount of 73wt%, and the weight average molecular weight was 4,089g/mol.

### Preparation of bisphenol phenolic resin DF1

The bisphenol phenolic resin DF1 was prepared according to the preparation method for the bisphenol phenolic resin F1, except that NaOH was added such that the concentration of n(OH)⁻ in the system was 4mol/L, and the weight average molecular weight was 1,203 g/mol.

**Table 1**

| Curable composition | | | A1 | A2 | A3 | A4 | A5 | A6 |
|---|---|---|---|---|---|---|---|---|
| Component A | Aqueous thennosetting resin | Dosage /g | 40 | 30 | 40 | 40 | 40 | 40 |
| | Solvent-type | Type | PI | PI | PI | PI | PI | PI |
| | | Dosag | 20 | 30 | 20 | 20 | 20 | 20 |
| | thennosetting resin | e /g | | | | | | |
| | Emulsifier | Type | 18-2-18 | Sodium stearate | 18-2-18 | 18-2-18 | 18-2-18 | 18-2-18 |
| | | Dosage /g | 3 | 2 | 3 | 3 | 3 | 3 |
| | Water | Dosage /g | 37 | 38 | 37 | 37 | 37 | 37 |
| Component B | Modified SiO₂ | Type | M1 | M1 | M2 | M1 | M1 | / |
| | | Dosage /g | 5 | 5 | 5 | 5 | 80 | / |
| | Bisphenol phenolic resin | Type | F1 | F1 | F1 | F2 | / | F1 |
| | | Dosage /g | 75 | 65 | 75 | 75 | / | 80 |
| | Total amount of component B | | 80 | 70 | 80 | 80 | 80 | 80 |
| Apparent viscosity /mPa·s | | | 231 | 294 | 267 | 258 | 225 | 276 |

**Table 1 (continued)**

| Curable composition | | | A7 | A8 | A9 | A10 | D1 | D2 |
|---|---|---|---|---|---|---|---|---|
| Component A | Aqueous thennosetting resin | Dosage /g | 15 | 40 | 22 | 40 | / | 40 |
| | Solvent-typ e thennosetti ng resin | Type | PI | PI | PI | PI | PI | PI |
| | | Dosag e /g | 32 | 20 | 8 | 20 | 60 | 20 |
| | Emulsifier | Type | 18-2-18 | 18-2-18 | 18-2-18 | 18-2-18 | 18-2-18 | 18-2-18 |
| | | Dosag e /g | 3 | 3 | 3 | 3 | 3 | 3 |
| | Water | Dosag e /g | 50 | 37 | 67 | 37 | 37 | 37 |
| Component B | Modified SiO₂ | Type | M1 | M1 | M1 | M1 | M1 | / |
| | | Dosag e /g | 5 | 2.5 | 5 | 5 | 5 | / |
| | Bisphenol phenolic resin | Type | F1 | F1 | F1 | DF1 | F1 | / |
| | | Dosage /g | 75 | 37.5 | 75 | 75 | 75 | / |
| | Total | | 80 | 40 | 80 | 80 | 80 | / |
| | amount of component B | | | | | | | |
| | Conventional curing agent | | Ethylene diamine | Ethylene diamine | Ethylene diamine | Ethylene diamine | Ethylene diamine | Ethylene diamine |
| | Dosage /g | | - | - | - | - | - | 80 |
| Apparent viscosity /mPa·s | | | 285 | 186 | 384 | 63 | 528 | 885 |

### Examples 1-10

According to the formula in Table 1 and Table 1 (continued), the ingredients of component A in the curable resin compositions A1-A10 were mixed, followed by blending with a component B and curing to obtain the honeycomb resin products L1-L10, wherein a curing conditions included a curing temperature of 130°C and a curing time of 30min.

### Comparative Examples 1-2

The honeycomb resin products DL1-DL2 were prepared according to the method of Example 1, except that the curable resin composition A1 was replaced with the curable resin compositions D1-D2 respectively.

### Test Example

The properties of the honeycomb resin products prepared in the Examples and Comparative Examples were tested, the results were shown in Table 2.

**Table 2**

| No. | Porosity /% | Pore size /mm | Pore density /pores | Density /g/cm³ | Compressive strength /MPa | Deformation rate /% |
|---|---|---|---|---|---|---|
| L1 | 23.6 | 0.3 | 334 | 0.895 | 45 | 0.9 |
| L2 | 22.4 | 0.35 | 233 | 0.896 | 44 | 1.1 |
| L3 | 21.5 | 0.41 | 163 | 0.892 | 40 | 1.5 |
| L4 | 20.6 | 0.39 | 173 | 0.905 | 42 | 1.3 |
| L5 | 21.3 | 0.45 | 134 | 0.895 | 39 | 1.9 |
| L6 | 20.6 | 0.52 | 97 | 0.903 | 39 | 1.7 |
| L7 | 27.8 | 0.7 | 72 | 0.883 | 33 | 1.5 |
| L8 | 26.4 | 0.68 | 73 | 0.886 | 30 | 1.3 |
| L9 | 37.2 | 0.65 | 112 | 0.852 | 32 | 1.6 |
| L10 | 19 | 0.87 | 32 | 0.921 | 12 | 15 |
| DL1 | 2 | 0 | 0 | 0.962 | 8 | 9 |
| DL2 | 3 | / | / | 0.965 | 21 | 8 |

The permeability of the honeycomb resin products prepared in the Examples and the Comparative Examples, the quartz sand and the ceramsite sand was tested respectively, wherein the test was performed by using a high-pressure displacement device, according to the Enterprise Standard Q/SH1020 "High-permeability solid rock core permeability measurement method" issued by the Sinopec Shengli Oilfield Administration Bureau, the results were shown in Table 3.

**Table 3**

| No. | Permeability under different confining pressures (millidarcy) | | | | |
|---|---|---|---|---|---|
| | 10MPa | 20MPa | 30MPa | 40MPa | 50MPa |
| L1 | 5000 | 5000 | 5000 | 4683 | 2957 |
| L2 | 5000 | 5000 | 5000 | 4559 | 2756 |
| L3 | 5000 | 5000 | 5000 | 4387 | 2291 |
| L4 | 5000 | 5000 | 5000 | 4052 | 1932 |
| L5 | 5000 | 4502 | 2875 | 2498 | 892 |
| L6 | 5000 | 3974 | 2751 | 2337 | 908 |
| L7 | 5000 | 3869 | 2550 | 1964 | 893 |
| L8 | 5000 | 3631 | 2384 | 1967 | 867 |
| L9 | 5000 | 3764 | 2398 | 1706 | 786 |
| L10 | 2460 | 1005 | 593 | 104 | 3 |
| DL1 | 1803 | 630 | 295 | 96 | 0 |
| DL2 | 1630 | 586 | 198 | 68 | 0 |
| Quartz sand ¹ | 654 | 320 | 23 | 2 | 2 |
| Ceramsite sand ² | 1260 | 1260 | 962 | 899 | 865 |

| | | | | | |
|---|---|---|---|---|---|
| * In the present disclosure, 5,000 millidarcy in the test example does not represent the upper limit of the permeability, but only the upper limit of the high pressure displacement device test instrument. 1- The particle size of quartz sand is within the range of 400-800µm. 2- The particle size of ceramsite sand is within the range of 400-800µm. | | | | | |

As can be seen from the above results, Examples 1-10 produce the desirable technical effects, the prepared honeycomb resin products have an appropriate pore and channel structure.

Wherein the preferred examples 1-4, among others, achieve significantly better technical results with a compressive strength not lower than 40MPa, and a deformation rate not higher than 1.5%.

The honeycomb resin products prepared with a curable composition provided by the present disclosure have superior permeability compared to the quartz sand and the ceramsite sand, in particular, the honeycomb resin products provided by the present disclosure exhibit superior permeability over the quartz sand and the ceramsite sand under a high-pressure condition, without the need of additional addition of quartz sand and ceramsite sand as a proppant during the fracturing process.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A curable resin composition comprises a component A and a component B, wherein the component A and the component B are each independently present;
the component A comprises an aqueous thermosetting resin, a solvent-type thermosetting resin, an emulsifier, and water;
the component B comprises a curing agent selected from modified nanosilica represented by formula I and/or a bisphenol phenolic resin; 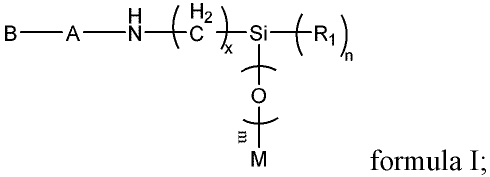
in the formula I, M denotes nanosilica particles, x is an integer from 1 to 4, and R₁ is C1-C4 alkyl;
n is an integer from 0 to 3, m is an integer from 1 to 3, and n+m=3;
A is a structural unit from an anhydride-based compound, and B is a structural unit from a polyamino compound;
the bisphenol phenolic resin comprises a structural unit represented by formula II and a structural unit represented by formula III; 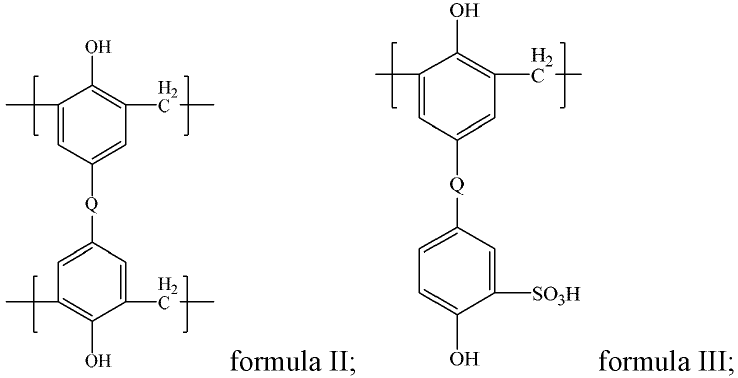
Q is 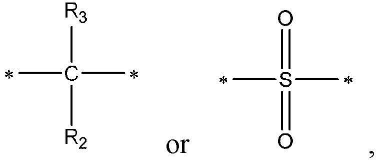 wherein R₂ and R₃ are each independently H, CH₃, CF₃ or CH₂CH₃;
based on a total weight of the bisphenol phenolic resin, a content of said structural unit represented by formula II is 0-100 wt%, and a content of said structural unit represented by formula III is 0-100 wt%.

2. The curable resin composition according to claim 1, wherein in formula I, the anhydride-based compound is at least one selected from a group consisting of maleic anhydride, phthalic anhydride, and succinic anhydride;
optionally, the polyamino compound includes a linear polyethylene polyamino compound having a structure represented by formula IV, or a nonlinear polyethylene imine having a number average molecular weight within a range of 300-3,000; 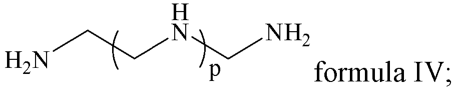
wherein p is an integer of 1-6.

3. The curable resin composition according to claim 1 or 2, wherein the nanosilica particles M have an average particle size within a range of 10-500nm and a specific surface area within a range of 10-300 m²/g;
optionally, the modified nanosilica has an average particle size within a range of 10-500nm and a specific surface area within a range of 50-500 m²/g;
optionally, the modified nanosilica has a particle size dispersion coefficient within a range of 0.09-0.15;
optionally, the modified nanosilica has an amino content within a range of 0.1-5mmol/g.

4. The curable resin composition according to any one of claims 1-3, wherein Q is 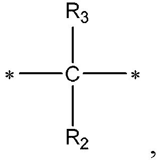 wherein R₂ and R₃ are each independently H or CH₃, optionally CH₃;
optionally, based on a total weight of the bisphenol phenolic resin, a content of said structural unit represented by formula II is 60-80 wt%, and a content of said structural unit represented by formula III is 20-40 wt%.

5. The curable resin composition according to any one of claims 1-4, wherein the bisphenol phenolic resin has a weight average molecular weight within a range of 2,000-10,000g/mol, optionally within a range of 3,000-5,000g/mol.

6. The curable resin composition according to any one of claims 1-5, wherein in the component A, the aqueous thermosetting resin is contained in an amount of 5-40 parts by weight, optionally 30-40 parts by weight, the solvent-type thermosetting resin is contained in an amount of 10-76 parts by weight, optionally 20-40 parts by weight, the emulsifier is contained in an amount of 0.5-4 parts by weight, optionally 2-3 parts by weight, and water is contained in an amount of 16-50 parts by weight, optionally 17-48 parts by weight;
optionally, mass ratio of the modified nanosilica to the bisphenol phenolic resin is 1: (10-20), more optionally 1: (12-15);
optionally, relative to a total dosage of the component A, the component B is used in an amount of 40-80 parts by weight, more optionally 60-80 parts by weight.

7. The curable resin composition according to any one of claims 1-6, wherein the aqueous thermosetting resin has a structure represented by formula V; 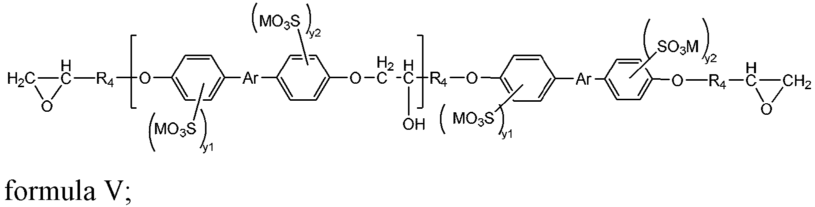
R₄ is C1-C3 alkylene;
Ar is 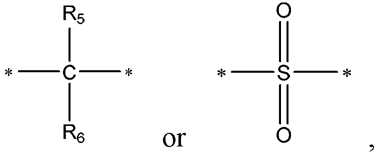 wherein R₅, R₆ are each independently H, CH₃, CF₃, or CH₂CH₃; $0 < y 1 + y 2 \leq 8 ;$
m is K or Na.

8. The curable resin composition according to claim 7, wherein R₄ is C₁-C₂ alkylene;
optionally, Ar is 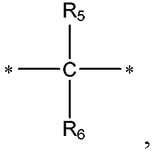 wherein R₅ and R₆ are each independently H, CH₃, CF₃ or CH₂CH₃;
M is Na.

9. The curable resin composition according to any one of claims 1-8, wherein a content of S element in the aqueous thermosetting resin is within a range of 6-20wt%, optionally within a range of 10-15wt%;
optionally, the aqueous thermosetting resin has an epoxide equivalent within a range of 100-300mol/100g, more optionally within a range of 150-200mol/100g.

10. The curable resin composition according to any one of claims 1-9, wherein the emulsifier is selected from a cationic emulsifier and/or an anionic emulsifier;
optionally, the cationic emulsifier is at least one selected from a group consisting of dodecyl trimethyl ammonium chloride, tetradecyl trimethyl ammonium chloride, hexadecyl trimethyl ammonium chloride, octadecyl trimethyl ammonium chloride, docosyl trimethyl ammonium chloride, N,N-ethylene bis-octadecyl dimethyl ammonium chloride, dodecyl dimethyl benzyl ammonium chloride, hexadecyl dimethyl benzyl ammonium chloride, octadecyl dimethyl benzyl ammonium chloride;
optionally, the anionic emulsifier is at least one selected from a group consisting of sodium stearate, sodium dodecyl sulfate, sodium dodecyl benzene sulfonate, sodium oleate, sodium laurate, sodium rosinate, sodium bis(dodecyl phenyl ether) disulfonate, sodium dibutyl naphthyl sulfonate.

11. The curable resin composition according to any one of claims 1-10, wherein the solvent-type thermosetting resin is at least one selected from a group consisting of an epoxy resin, a polyimide, and an unsaturated resin.

12. The curable resin composition according to any one of claims 1-11, wherein the curable resin composition has an apparent viscosity at 25°C within a range of 100-400mPa·s, optionally within the range of 200-300mPa·s.

13. A honeycomb resin product prepared with the curable resin composition according to any one of claims 1-12.

14. The honeycomb resin product according to claim 13, wherein the honeycomb resin product has connected channels.

15. The honeycomb resin product according to claim 13 or 14, wherein the honeycomb resin product has a porosity within a range of 1-40%, optionally within a range of 20-30%;
optionally, the honeycomb resin product has a pore size within a range of 0.1-0.7mm; more optionally within a range of 0.3-0.5mm;
optionally, the honeycomb resin product has a pore density within a range of 20-450 pcs/cm², more optionally within a range of 100-400 pcs/cm².

16. The honeycomb resin product according to any one of claims 13-15, wherein the honeycomb resin product has a density within a range of 0.85-0.95g/cm³, optionally within a range of 0.88-0.91g/cm³.

17. The honeycomb resin product according to any one of claims 13-16, wherein the honeycomb resin product has a compressive strength within a range of 20-40MPa; optionally within a range of 30-40MPa;
optionally, a deformation ratio of the honeycomb resin product under the pressure of 40MPa and the temperature of 90°C is equal to or less than 8%, more optionally equal to or less than 4%.

18. A method for preparing the honeycomb resin product comprising:
mixing ingredients of component A in the curable resin composition according to any one of claims 1-12, then blending with a component B and curing to obtain the honeycomb resin product.

19. The method according to claim 18, wherein a curing conditions comprise a curing temperature within a range of 90-150°C and a curing time from 10min to 6h;
optionally, the curing conditions comprise a curing temperature within a range of 120-150°C and a curing time from 30min to 4h.

20. The method for using the curable resin composition according to any one of claims 1-12 or the honeycomb resin product according to any one of claims 13-17 in at least one of oil reservoir development, architectural floor tiles and adsorbent materials.
